# EUROPÄISCHE PATENTANMELDUNG

(11) **EP 2 306 118 A2**
(43) Veröffentlichungstag der Anmeldung: **06.04.2011**
(21) Anmeldenummer: 10169528.6
(22) Anmeldetag: 14.07.2010
(51) Int. Cl.: F24J 2/52, H01L 31/042

(54) **Vorrichtung zur Montage von Solarmodulen auf Flachdächern**

(30) Priorität: 20.07.2009 CH 11442009
(71) Anmelder: Leutenegger, Stephan, 8700 Küsnacht (CH)
(72) Erfinder: Leutenegger, Stephan, 8700 Küsnacht (CH)
(74) Vertreter: Rentsch & Partner

(57) **Zusammenfassung**

Eine Montagevorrichtung (1, 1') zur Montage von Solarmodulen (61) auf einer ebenen Grundfläche (7) weist mindestens einem Grundelement (2) mit einer ebenen Auflagefläche (23) auf, welches dazu geeignet ist, auf der ebenen Grundfläche (7) angeordnet zu werden, sowie mindestens ein Tragelement (3), welches auf einem Grundelement (2) befestigt (5) ist oder befestigbar ist. Das Tragelement (3) ist geeignet, mit einem Solarmodul (61) form-und/oder kraftschlüssig verbunden (4) zu werden, und ist im wesentlichen ringförmig (31) ausgestaltet, wobei die Achse (35) des ringförmigen Tragelements (3) parallel zur Auflagefläche (23) des mindestens einen Grundelementes (2) verläuft.

## Beschreibung

### Technisches Gebiet

Die Erfindung betrifft Montagevorrichtungen für Solarmodule auf Flachdächern.

### Stand der Technik

Aus Gründen des Klimaschutzes und aufgrund der sich in absehbarer Zukunft zuspitzenden Energieknappheit werden heute immer mehr bestehende Gebäude mit Solarmodulen nachgerüstet, und auch neue Gebäude werden häufig direkt mit Solarmodulen ausgerüstet. Solarmodule für Gebäude sind in der Regel photovoltaische Module, welche aus Licht direkt elektrischen Strom erzeugen, oder solarthermische Kollektoren, welche einfallende Solarstrahlung zur Wärmegewinnung nutzen.

Soll ein bestehendes Flachdach mit einer Solaranlage nachgerüstet werden, so wird auf der im wesentlichen ebenen Grundfläche des Dachs eine oder mehrere Tragstrukturen aufgebaut, auf denen dann anschliessend die Solarmodule mit dem gewünschten vertikalen Neigewinkel montiert werden. Dazu ist es üblich, eine gegebenenfalls vorhandene Kiesschicht auf dem Flachdach zu entfernen, schwere Grundelemente, beispielsweise Betonplatten, zu verlegen, und auf dieser anschliessend eine gerüstähnliche Tragstruktur aufzubauen. Aufgrund der vielen notwendigen manuellen Montageschritte sind solche Montageschritte für Solarmodule aufwendig.

Bei einer anderen Variante aus dem Stand der Technik werden vorgefertigte Betonmodule verwendet, die gleichzeitig als beschwerendes Grundelement und als Tragstruktur dienen. Dies erlaubt einen vergleichsweise schnellen Aufbau. Jedoch erlauben derartige Elemente nur einen einzigen Neigewinkel für das Solarmodul. Für verschiedene Neigewinkel müssen darum verschiedene Betonmodule verwendet werden, was zu tiefen Stückzahlen führt und damit die Herstellungskosten steigen lässt.

Häufig sind Flachdächer nicht völlig plan, sondern weisen gewisse Unregelmässigkeiten auf, mit Höhendifferenzen von bis zu einigen Zentimetern. Um diese Unebenheiten einigermassen auszugleichen, werden oft lange, massive Aluminium- oder Chromstahl-Profile waagrecht auf dem Untergrund verbaut. Auf diesen werden dann die Tragstrukturen aufgebaut.

Werden Tragstrukturen verwendet, bei denen das Solarmodul auf zwei separaten Montagevorrichtungen angebracht wird, kann dies dazu führen, dass die Befestigungspunkte der Montagevorrichtungen nicht auf einer Ebene liegen. Damit das Solarmodul befestigt werden kann, müssen deshalb erst die Montagevorrichtungen gegeneinander in der Höhe ausgerichtet und justiert werden, beispielsweise durch Unterlegen von Distanzelementen. Eine solche Justierung erfolgt entweder vor der Montage der Solarmodule für die ganze Anlage, was eine vorgängige Vermessung nötig macht, oder erst bei der Montage der Module, was ebenfalls aufwendig ist.

### Aufgabe der Erfindung

Aufgabe der Erfindung ist es, eine Montagevorrichtung für Solarmodule zur Verfügung zu stellen, welche die oben erwähnten und andere Nachteile nicht aufweist. Insbesondere soll eine solche Montagevorrichtung einen schnellen und effizienten Aufbau einer Solaranlage mit einem oder mehreren Solarmodulen auf einer im wesentlichen ebenen Grundfläche wie beispielsweise einem Flachdach ermöglichen, ohne aufwendige Justierung der einzelnen Montagevorrichtungen an die lokalen Gegebenheiten der Grundfläche. Eine erfindungsgemässe Montagevorrichtung soll Unebenheiten der Grundfläche in einem bestimmten Ausmass ausgleichen können. Vorteilhaft soll eine solche Montagevorrichtung auch auf ebenen Grundflächen verwendet werden können, die eine Neigung zur Horizontalen aufweisen.

Weiter soll eine solche Montagevorrichtung möglichst leicht sein, um den Transport zu erleichtern, und den Verbrauch an Ressourcen zu minimieren. Die aufzuwendende Energie für Herstellung, Transport und Montage soll möglichst gering sein.

Eine erfindungsgemässe Montagevorrichtung soll zudem geringe Herstellungskosten aufweisen und aus wenigen Teilen vor Ort schnell zusammensetzbar sein.

Eine andere Aufgabe der Erfindung ist es, eine Montagevorrichtung für Solarmodule zur Verfügung zu stellen, die verschiedene Neigewinkel für das zu tragende Solarmodul erlaubt, bzw. mit geringem Aufwand an verschiedene Neigewinkel angepasst werden kann. Eine erfindungsgemässe Montagevorrichtung soll ferner robust sein gegenüber Windeinwirkung und Schneelast.

Diese und andere Aufgaben werden gelöst durch eine erfindungsgemässe Montagevorrichtung, ein erfindungsgemässer Unterbau für eine Solaranlage, und eine Solaranlage mit solchen Montagevorrichtungen, gemäss den unabhängigen Ansprüchen. Weitere bevorzugte Ausführungsformen sind in den abhängigen Ansprüchen gegeben.

### Darstellung der Erfindung

Eine erfindungsgemässe Montagevorrichtung zur Montage von Solarmodulen auf einer ebenen Grundfläche weist mindestens ein Grundelement mit einer ebenen Auflagefläche auf, welches dazu geeignet ist, auf der ebenen Grundfläche angeordnet zu werden, und mindestens ein Tragelement, welches auf einem Grundelement befestigt ist oder befestigbar ist. Das Tragelement ist geeignet, mit einem Solarmodul form- und/oder kraftschlüssig verbunden zu werden. Das mindestens eine Tragelement ist im wesentlichen ringförmig ausgestaltet, wobei die Achse des ringförmigen Tragelements parallel zur Auflagefläche des mindestens einen Grundelementes verläuft.

Vorteilhaft umfasst das Tragelement einer solchen erfindungsgemässen Montagevorrichtung einen Reif, wobei der Reif bevorzugt eine umlaufende Sicke zur zusätzlichen Stabilisierung aufweist. Das Tragelement kann zusätzlich oder alternativ eine Rondelle zur Stützung des Tragelements in radialer Richtung aufweisen, oder eine Sehne oder Speiche, oder eine Kombination dieser Elemente.

Das Grundelement einer erfindungsgemässen Montagevorrichtung ist bevorzugt eine Platte, insbesondere eine Betonplatte oder eine Metallplatte. Alternativ kann das Grundelement eine Wanne umfassen, welche dazu geeignet ist, mit Beton oder Kies befüllt zu werden.

Das Tragelement kann durch Verschrauben, vernieten oder ein anderes für eine bestimmte Materialkombination geeignetes Verfahren mit dem Grundelement verbunden werden, oder mittels einer vorteilhaften Haltevorrichtung der Montagevorrichtung, mit welcher das Tragelement und das Grundelement reversibel form- und/oder kraftschlüssig verbunden werden können.

Eine erfindungsgemässe Ausführungsform der Montagevorrichtung kann eine Haltevorrichtung zur Befestigung eines Solarmoduls auf der Montagevorrichtung aufweisen, wobei die Winkel-Position der Haltevorrichtung auf dem Umfang des ringförmigen Tragelements zumindest über einen Teilbereich des Umfangs wählbar ist.

Ein vorteilhafter erfindungsgemässer Unterbau für ein Solarmodul umfasst eine oder mehrere erfindungsgemässe Montagevorrichtungen. Eine erfindungsgemässe Solaranlage beinhaltet ein oder mehrere Solarmodulen, montiert auf erfindungsgemässen Montagevorrichtungen.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.
- Figur 1: zeigt eine Solaranlage mit erfindungsgemässen Montagevorrichtungen, (a) in einer perspektivischen Gitternetzansicht, (b) in Aufsicht als Gitternetz, (c) in Sei- tenansicht, (d) in einer perspektivischen Detailansicht, und (e) in Aufsicht auf ein Tragelement.
- Figur 2: zeigt eine Solaranlage bestehend aus mehreren Solarmodulen in Reihe, montiert auf einer Mehrzahl von erfindungsgemässen Montagevorrichtungen gemäss Fi- gur 1.
- Figur 3: zeigt eine Solaranlage mit anderen mögliche Ausführungsformen erfindungs- gemässer Montagevorrichtungen, (a) in einer schematischen Seitenansicht, und (b, c) in einem Querschnitt durch die Tragelemente.
- Figur 4: zeigt eine weitere Solaranlage mit erfindungsgemässen Montagevorrichtungen, in einer schematischen Seitenansicht.
- Figur 5: zeigt eine vorteilhafte Ausgestaltung einer Haltvorrichtung zur Befestigung ei- nes Tragelements einer erfindungsgemässen Montagevorrichtung am Grund- element, in einem Querschnitt.
- Figur 6: zeigt eine vorteilhafte Ausgestaltung einer Haltvorrichtung zur Befestigung ei- nes Solarmoduls an einem Tragelement einer erfindungsgemässen Montagevor- richtung, in einer Seitenansicht.
- Figur 7: zeigt noch eine Solaranlage mit vorteilhaften Ausführungsformen einer erfin- dungsgemässen Montagevorrichtung, mit einer befüllbaren Wanne als gemein- sames Grundelement, in einer schematischen Seitenansicht.
- Figur 8: zeigt in einer schematischen Seitenansicht eine Solaranlage mit einem gemein- samen Grundelement, an das eine zentrale Säule angeformt ist. An der Säule sind die ringförmigen Tragelemente befestigt.

### Ausführung der Erfindung

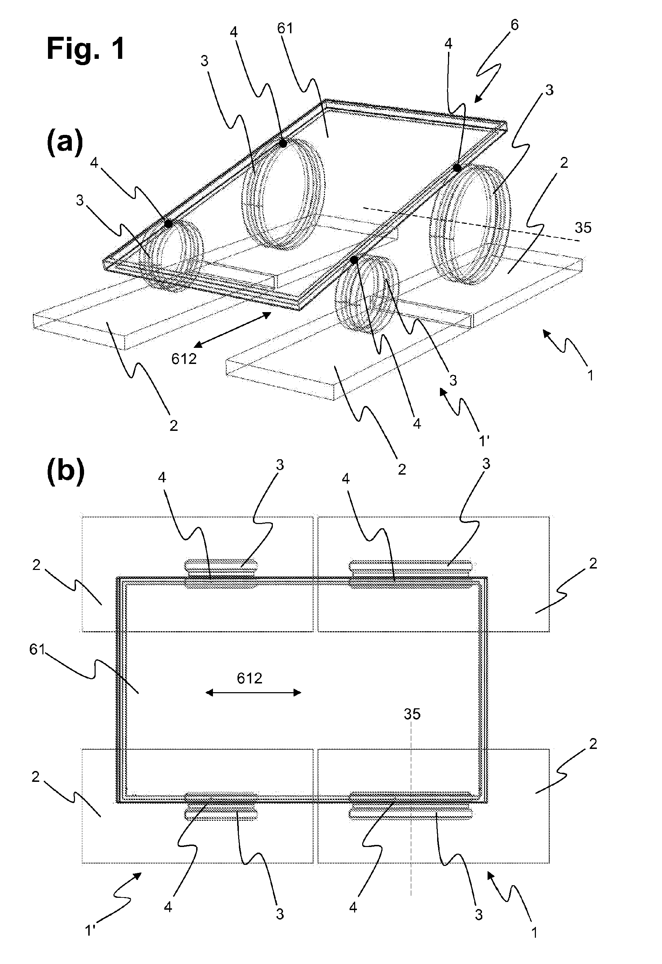

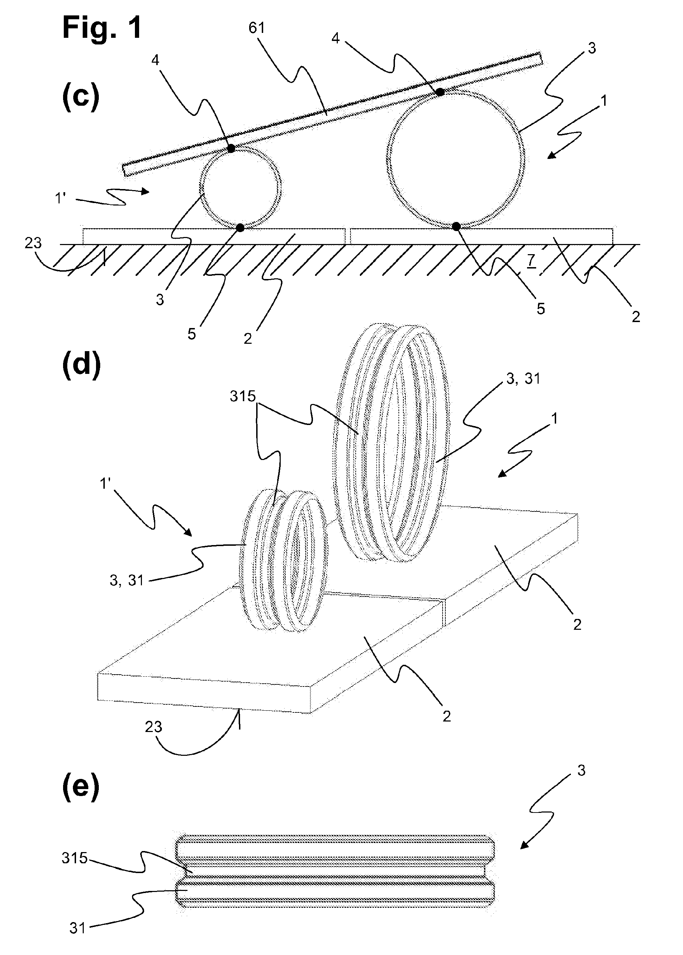

Vorteilhafte Ausführungsformen einer erfindungsgemässen Montagevorrichtung 1 sind in Figur 1 dargestellt. Die Figuren 1 (a), (b), (c) zeigen eine Solaranlage 6 umfassend ein gegen die Horizontale geneigtes Solarmodul 61, welches auf einem Unterbau aus vier erfindungsgemässen Montagevorrichtungen 1, 1' montiert ist. Die genannten Montagevorrichtungen 1, 1' weisen je ein Grundelement 2, auf dem wiederum ein ringförmiges Tragelement 3 angebracht ist. Beispielsweise kann das Tragelement an einem Befestigungspunkt 5 mit dem Grundelement 2 verschraubt sein.

Das Grundelement 2 ist im gezeigten Beispiel eine Betonplatte, welche auf einem Flachdach 7 verlegt wird. Die Betonplatte 2 dient zum einen der Abstützung des Solarmoduls 6, und zu anderen als Gewicht, um ein Wegwehen der Solarmodule bei starken Wind zu verhindern. Die erforderliche Masse der gesamten Struktur wird aufgrund von anerkannten Regeln (bspw. von SIA und DIN) je nach Höhenlage und Exponiertheit der Solaranlage festgelegt.

Alternativ wäre es auch möglich, das Grundelement lediglich kraft- und/oder formschlüssig mit der Grundfläche 7 zu verbinden, was jedoch aufwendiger und damit wenig kosteneffizient ist. Insbesondere bei der Nachrüstung von bestehenden Flachdächern wird in der Regel lediglich ein Deckbelag, in der Regel eine Kiesschicht, entfernt und das Grundelement 2 direkt auf die Abdichtschicht verlegt, gegebenenfalls mit einer dünnen Gummimatte als Zwischenlage zum Schutz der Abdichtschicht vor mechanischer Beschädigung.

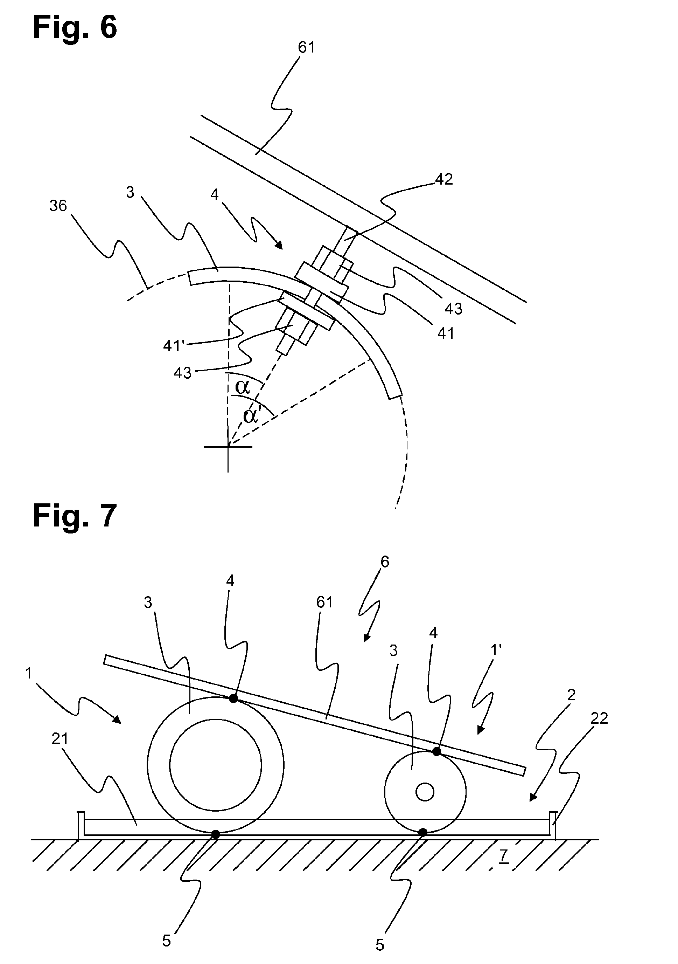

Anstatt einer Betonplatte kann das Grundelement beispielsweise auch als stabile Metallplatte ausgelegt sein, welche anschliessend mit einer passenden Anzahl kleinerer Gewichtselemente belegt wird. Dies vereinfacht den Aufbau einer erfindungsgemässen Montagevorrichtung. Eine weitere Alternative für die Ausgestaltung des Grundelements einer erfindungsgemässen Montagevorrichtung wird in Figur 7 besprochen.

Die eigentliche tragende Struktur einer erfindungsgemässen Montagevorrichtung 1, 1 ', nämlich das Tragelement 3, hat die Form eines Ringes. Der Ring besteht aus einem geeigneten Material, welches die notwendige Stabilität, Flexibilität und Wetterfestigkeit der Montagevorrichtung gewährleistet. Eine geeignete Wahl ist beispielsweise rostfreies Stahlblech, oder Aluminium. Die ringförmige Formgebung des Tragelementes 3 hat nun verschiedene erfindungsgemässe Vorteile, welche nachfolgend erläutert werden.

Zur Einstellung des Neigewinkels des Solarmoduls auf einen vorher festgelegten Wert kann beispielsweise der Abstand zwischen den zwei erfindungsgemässen Montagevorrichtungen 1, 1' in Längsrichtung 612 des Solarmoduls 61 verändert werden. Die Neigungslage des Solarmoduls wird dann jeweils durch die resultierende gemeinsame Tangente der beiden ringförmigen Tragelemente 3 bestimmt. Die genannte Verschiebung des Abstands kann z.B. erreicht werden durch ein Versetzen des Tragelements 3 auf dem Grundelement 2, und/oder durch ein Verschieben der Grundelemente 2 in Längsrichtung 612. Alternativ oder in Kombination kann auch der Durchmesser der ringförmigen Tragelemente (3) vorab entsprechend gewählt werden. Zu diesem Zweck können Tragelemente mit verschiedenen Durchmessern bereitgestellt werden, oder ein offener Reif eines Tragelementes wird durch Veränderung eines Überlappungsbereichs zweier Enden im Durchmesser verändert. Bei der letzteren Variante werden vorteilhaft an den Enden je eine Reihe von Befestigungslöchern vorgesehen, so dass der Durchmesser des Tragelements durch Wahl zweier Löcher bestimmt und mit einer Schraube einfach fixiert werden kann.

Die unterschiedliche Breiten von verschiedenen Typen von Solarmodulen kann wiederum einfach durch Verschieben der Montagevorrichtungen in Querrichtung berücksichtigt werden.

In der Regel werden vor dem Aufbau einer Solaranlage 6 die Position und Dimensionierung der Montagevorrichtungen 1, 1', insbesondere der Grundelemente 2 und der Tragelemente 3, vorgängig festgelegt, auf Grundlage des gewünschten Neigewinkels und der gegebenen Dimensionen der zu verbauenden Solarmodule 61, sowie der Lage von eventuell vorhandenen Montagepunkten auf den Solarmodulen. Bei Aufbau der Anlage können dann auf der vorbereiteten Grundfläche 7 die Montagevorrichtungen mit einer vorbereiteten Lehre verlegt werden. Im Falle der erfindungsgemässen Montagevorrichtung 1, 1' aus der Figur 1 werden beispielsweise zuerst die plattenförmigen Grundelemente 2 verlegt. In einem zweiten Arbeitsgang werden dann auf den Grundelementen 2 die ringförmigen Tragelemente 3 befestigt. Anschliessend werden dann auf den fertig gestellten Montagevorrichtungen 1, 1' die Solarmodule 61 montiert. Beispielsweise kann der Rahmen eines Solarmoduls 61 an vier Befestigungspunkten 4 mit jeweils einem Tragelement 3 vernietet, verschraubt, verklemmt oder andere Weise wirkschlüssig verbunden werden. Eine mögliche alternative Haltevorrichtung 4 wird in Figur 6 besprochen.

Die ringförmigen Tragelemente 3 der erfindungsgemässen Montagevorrichtung 1, 1' aus Figur 1 sind als Blechreif 31 ausgestaltet, welcher über den gesamten Umfang mit einer durchgehenden, zentralen Sicke 315 versehen ist. Diese Sicke 315 versteift den Reif 31 vor allem gegen Verformungen in radialer Richtung. Die für ein zu tragendes Gewicht eines Solarmodules notwendige Dicke des Blechs des Reifes 31 kann so minimiert werden. Anstatt einer Sicke können auch zwei oder mehr Sicken angebracht werden.

Ein Blechreif kann vergleichsweise kostengünstig in beliebigen Dimensionen auf einem flachen Blechrohling hergestellt werden, und das Anbringen der Sicke am Blechring ist ebenfalls in einem einfachen maschinell durchführbaren Schritt möglich. Die Herstellungskosten der Tragelemente sind damit gering im Vergleich mit vielen Einzelteilen, und die Toleranzen für die Fertigungsgenauigkeit sind gross.

Der modulare Aufbau einer erfindungsgemässen Montagevorrichtung 1, 1' ermöglicht es, mit einer kleinen Auswahl von standardisierten Bestandteilen viele verschiedene Fälle abzudecken. Der Aufwand zum Aufbau einer einzelnen Montagevorrichtung 1, 1' ist gering, da im wesentlichen nur zwei Befestigungspunkte 4, 5 vorhanden sind, an welchen jeweils zwei Teile miteinander verbunden werden müssen. Es wäre auch möglich, das Tragelement 3 and das Grundelement bereits vor dem Aufbau vor Ort fest miteinander zu verbinden. Diese würde jedoch zu einem erhöhten Transportaufwand führen.

In der Regel sind die Grundflächen, auf denen eine Solaranlage aufgebaut werden soll, nicht vollständig plan. Zwar betragen die Höhenabweichungen vielleicht nur einige Zentimeter, was bei horizontalen Dimensionen von vielen Metern gering erscheint. Bei der passgenauen Montage von Solarmodulen auf einem starren Unterbau, wie sie aus dem Stand der Technik bekannt ist, können so jedoch schnell Differenzen entstehen, welche die für die Montage noch akzeptable Toleranzschwelle überschreiten. Über mehrere Solarmodule 61 können sich die Differenzen zudem kumulieren. Um dies zu verhindern und eine saubere, spannungsfreie Montage der Solarmodule zu ermöglichen, müssen Unebenheiten vorgängig festgestellt und ausgeglichen, oder nachträglich korrigiert werden. Dies kann die Kosten und die notwendige Zeitdauer für den Aufbau einer Anlage erheblich erhöhen.

Bei der erfindungsgemässen Montagevorrichtung 1 hingegen ist das Tragelement 3 in einem gewissen Bereich flexibel. Beispielsweise kann der Reif 31 des Tragelements 3 in radialer Richtung gestaucht oder gedehnt werden, und in horizontaler Richtung ist eine Verdrehung oder Neigung möglich. Der dabei erreichbare Grad an Verformung, ohne das die strukturelle Festigkeit der Tragelemente 3 beeinträchtigt wird, ist dabei in Relation zu den Gesamtdimensionen der Montagevorrichtung bzw. der gesamten Solaranlage vergleichsweise klein. Die Flexibilität ist jedoch mehr als ausreichend, um Differenzen aufgrund eines unebenen Untergrunds 7 auszugleichen. Höhenunterscheide von mehreren Zentimetern können so mit erfindungsgemässen Montagevorrichtungen 1, 1' problemlos aufgefangen werden. Da sich die notwendige die Verformung der Tragelemente 3 bei der Montage der Solarmodule 61 von alleine ergibt, ist kein spezieller Arbeitsschritt zur Korrektur und Justierung notwendig. Damit bleibt der Montageaufwand gering.

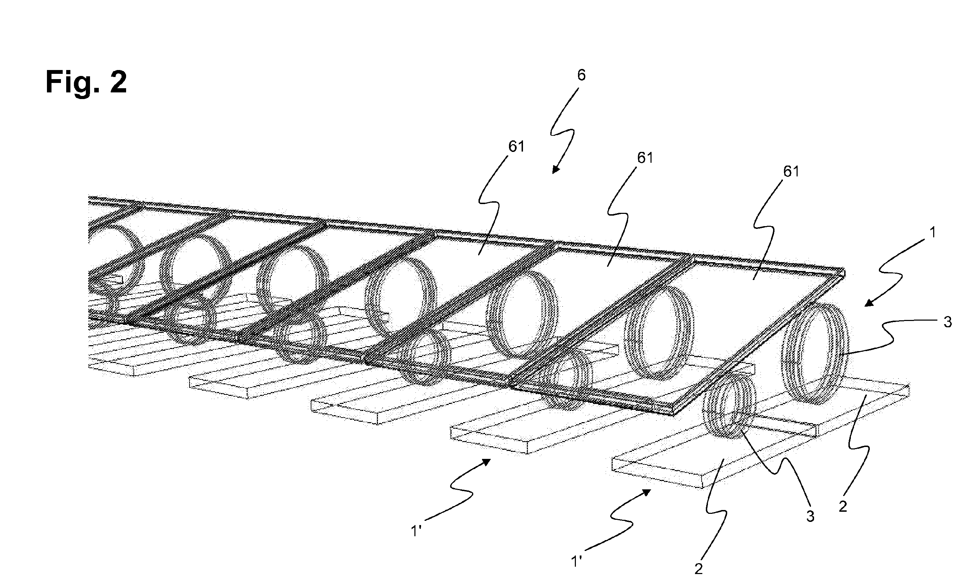

Insbesondere ist es mit einer erfindungsgemässen Montagevorrichtung 1, 1' problemlos möglich, zwei benachbarte Solarmodule 6 auf einer gemeinsamen Montagevorrichtung 1, 1' zu befestigen. Figur 2 zeigt ein Beispiel einer Solaranlage 6, bei der eine Vielzahl einzelner Solarmodulen 61 in Reihe montiert sind, wobei jeweils zwischen zwei Modulen 61 zwei gemeinsame erfindungsgemässe Montagevorrichtungen 1, 1' angebracht sind.

Ein weiterer Vorteil eines Unterbaus mit erfindungsgemässen Montagevorrichtungen ist, dass bei starkem Wind oder grosser Schneelast die Tragelemente der erfindungsgemässen Montagevorrichtungen in einem gewissen Mass flexibel nachgeben können, was das Risiko einer Beschädigung der teuren Solarmodule 61 verkleinert.

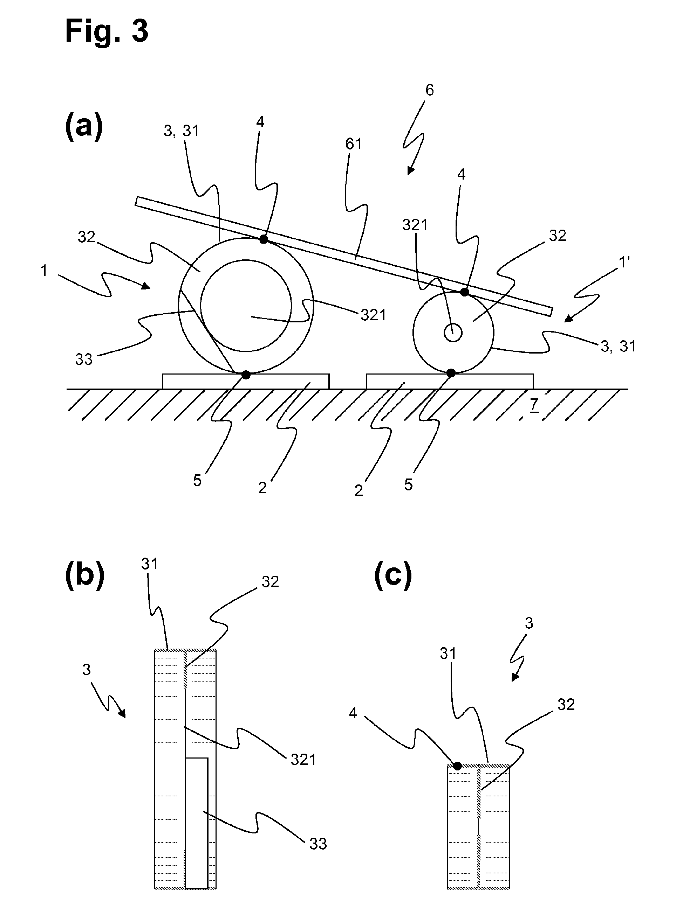

Andere mögliche Ausführungsformen von erfindungsgemässen Montagevorrichtungen 1, 1' sind in Figur 3 gezeigt, in schematischen Seitenansicht einer Solaranlage 6 mit einem Solarmodul 61, welches auf zwei erfindungsgemässen Montagevorrichtungen 1, 1' gelagert ist. Bei der Montagevorrichtung 1' rechts in Figur 3(a) besteht das Tragelement 3 aus einem Reif 31, welcher durch eine Blechrondelle 32 in der Mitte des Reifs 31 radial verstärkt ist. Das entsprechende Tragelement ist auch in Figur 3(c) dargestellt, in einem Querschnitt durch das Zentrum. Die gezeigte Ausführungsform des Tragelements 3 ist steifer als diejenige aus Figur 1, und kann damit höhere Lasten aufnehmen. Hingegen ist die Flexibilität kleiner, was jedoch kein Problem darstellt. Der Befestigungspunkt 4 liegt in einem peripheren Randbereich des Reifs 31, in welchem der Reif in radialer Richtung verform werden kann.

Ein zentrales Loch 321 kann dazu dienen, mehrere solche Tragelemente 3 auf einem Seil aufzureihen, und die resultierende Kette von vielen Tragelementen effizient mit einem Kran auf ein Dach transportieren zu können.

Das Tragelement 3 der Montagevorrichtung 1 links in Figur 3(a), welches im Querschnitt in Figur 3(b) gezeigt ist, weist ebenfalls eine Rondelle 32 auf, welche in der Mitte des Reifs 31 angebracht ist. Aufgrund der grösseren Dimensionen des Tragelements als bei der Variante in Figur 3(c) ist in diesem Fall ein zentrales Loch 321 aufgrund der Materialersparnis in jedem Fall vorteilhaft. Das dargestellte Tragelement weist zudem eine Sehne 33 auf, in Form eines rechteckigen Blechs, welches an seinen Längsenden mit dem Reif 31 verschweisst ist, und gegebenenfalls auch mit der Rondelle 32. Die Sehne 33 dient der gezielten zusätzlichen Versteifung des Tragelementes 3. Es können alternativ auch mehrere Sehnen angebracht werden, auch auf verschiedenen Seiten der Rondelle. Eine Variante des Tragelements ohne Sehne ist in Figur 7 links dargestellt.

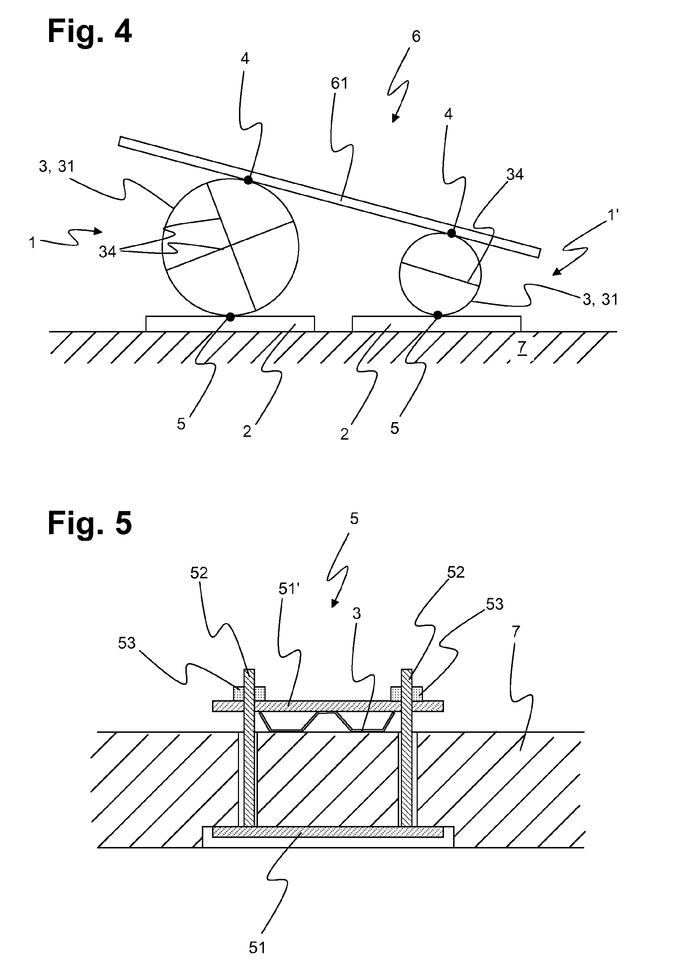

Eine weitere Variante von Tragelementen 3 für erfindungsgemässe Montagevorrichtungen 1, 1' ist schematisch in Figur 4 dargestellt. Bei diesen dienen Speichen 34 als Versteifungs-und/oder Verstärkungselemente eines Reifes 31. Eine solche Speiche 34 kann beispielsweise ein rechteckiges Bleckstück sein, welches an den Längsenden an den Reif 31 geschweisst wird.

Statt das Tragelement bereits vor der Montage des Solarmoduls 6 auf dem Tragelement 3 fix mit dem Grundelement 2 zu verbinden, kann es vorteilhaft sein, dieses erst provisorisch zu befestigen. Auf diese Art kann beispielsweise ein mit einer vorgefertigten Bohrung als Befestigungspunkt 4 versehenes Tragelement 3 bei der Montage des Solarmoduls sehr leicht in die richtige Position gebracht werden, indem das ringförmige Tragelement gedreht wird. Eine solche vorteilhafte Haltevorrichtung 5 für eine erfindungsgemässe Montagevorrichtung 1 ist beispielsweise in Figur 5 gezeigt.

Ein erster Halteblock 51 ist in einer Vertiefung auf der einer Grundfläche 7 zugewandten Seite eines Betonblock-Grundelements 2 angeordnet. An diesem Halteblock 51 sind zwei Stangen 52 befestigt, welche sich durch zwei Löcher in der Betonplatte 2 auf die gegenüberliegende Seite erstrecken. Auf der oben liegenden Seite des Betonblocks 2 ist ein zweiter Halteblock 51' angeordnet, wobei die beiden Stangen 52 durch Bohrungen im Block 51' verlaufen. An ihrem Ende sind die Stangen 52 mit einem Gewinde versehen, so dass mittels zweier Schraubmuttern 53 der Halteblock 51 formschlüssig gehalten werden kann. Die resultierende Haltevorrichtung 5 kann somit ein zwischen dem Grundelement 2 und dem zweiten Halteblock 51' durchgeführtes Tragelement 3 klemmend fixieren.

Beim Aufbau einer erfindungsgemässen Montagevorrichtung mit einer solchen Haltevorrichtung 5 wird vor dem Verlegen des Grundelements 2 der Halteblock mit den zwei Stangen 52 am Grundelement 2 angebracht. Anschliessend wird das Tragelement 3, im gezeigten Beispiel ein Blechreif mit Sicke, zwischen den Stangen 52 positioniert, und mit dem zweiten Halteblock 51 und den Schraubmuttern provisorisch fixiert. Wird nun das Solarmodul auf dem Tragelement 3 montiert, so kann durch Drehen des Tragelements 3 eine Feinjustierung des Befestigungspunktes 4 vorgenommen werden. Anschliessend kann durch Anziehen der Schraubmuttern das Tragelement definitiv festgeklemmt werden.

Ebenfalls kann für die Befestigung des Solarmoduls 61 eine variabel einstellbare Haltevorrichtung 4 vorgesehen sein, wie sie in Figur 6 dargestellt ist. Zwei Halteblöcke 41, 41' sind auf der Innenseite und der Aussenseite eines Reifs 31 des Tragelements 3 angeordnet. Zwei mit Aussengewinde und Schraubenmuttern 43 versehene Stangen oder Bolzen 42 sind an den beiden Aussenseiten des Reifs 31 angeordnet. Diese Haltevorrichtung 4 wird provisorisch um den Reif 31 zusammengebaut, und kann entlang des Umfangs 36 des Tragelementes 3 auf die gewünschte Winkelposition α verschoben werden. Anschliessend werden die Schraubenmuttern 43 angezogen, und die Haltevorrichtung 4 an der gewünschten Position definitiv festgeklemmt. Eine der Stangen 42 kann nun verwendet werden, um das Solarmodul 61 zu montieren.

In einer weiteren Variante eines solchen vorteilhaften Haltevorrichtung (4) wird eine Druckschraube im Halteblock 41' verwendet, die sich auf der Innenseite des Reifs 31 des Tragelements 3 abstützt, um die Haltevorrichtung kraftschlüssig zu arretieren.

Anstatt für jede erfindungsgemässe Montagevorrichtung 1 ein eigenes Grundelement 2 vorzusehen, können auch Grundelemente 2 von mehreren Montagevorrichtungen 1, 1' zu einem gemeinsamen Grundelement 2' zusammengefasst werden. Wird ein solches Grundelement 2' als Betonplatte ausgestaltet, so wird eine solche Platte jedoch sehr schwer, was die notwendige Logistik für den Aufbau einer Solaranlage 6 erschwert. Stattdessen kann ein Grundelement 2' auch erst vor Ort mit dem notwendigen Gewicht versehen werden. Eine solche Lösung ist in Figur 7 offenbart. Das Grundelement 2' umfasst eine leichte Wanne 22, beispielsweise aus Plastik oder Blech, welche nach dem Verlegen auf der Grundfläche 7 und dem Anbringen der Tragelemente 3 der beiden Montagevorrichtungen 1, 1' mit beschwerendem Material 21 befüllt wird. Dies kann zum Beispiel Kies sein, welches beim vorgängigen Räumen einer Dachfläche angefallen ist. Alternativ können auch eine Mehrzahl kleinerer Gewichtselemente in der Wanne 22 deponiert werden, oder die Wanne wird mit Beton befüllt. Eine solche Variante für ein Grundelement 2 ist natürlich auf für eine erfindungsgemässe Montagevorrichtung mit nur einem Tragelement vorteilhaft.

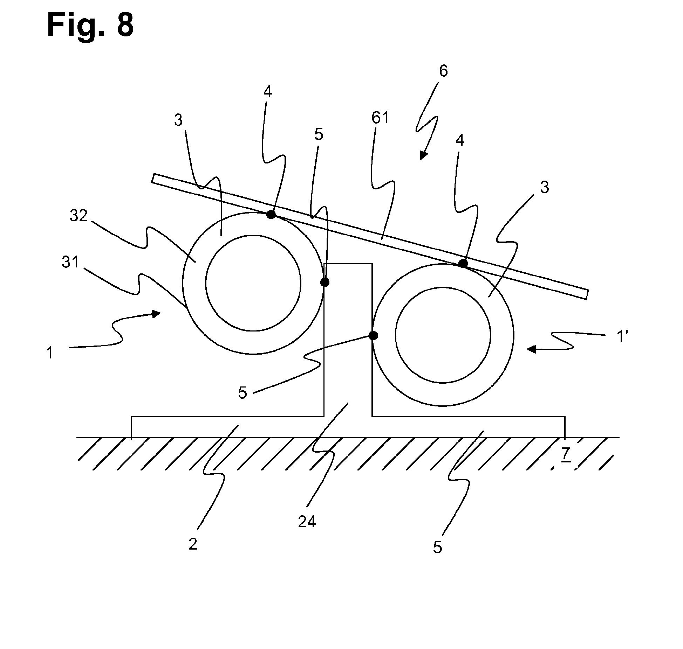

Eine weitere vorteilhafte Variante einer erfindungsgemässen Montagevorrichtung 1, 1' zeigt Figur 8. Ein Betonformteil umfasst eine gemeinsame Grundplatte 2 und eine darauf angeformte zentrale Säule 24. Zwei ringförmige Tragelemente 3 sind an Befestigungspunkten 5 seitlich an der Säule befestigt.

### Bezugszeichenliste

- α, α': Winkel der Haltevorrichtung
- 1, 1': Montagevorrichtung
- 2, 2': Grundelement
- 21: Füllung, Beschwerung
- 22: Wanne
- 23: Auflagefläche
- 24: Säule
- 3: Tragelement
- 31: Reif
- 315: Sicke
- 32: Rondelle
- 321: Loch
- 33: Sehne
- 34: Speiche
- 35: Achse
- 36: Umfang
- 4: Befestigungspunkt, Haltevorrichtung
- 41, 41': Halteblock
- 42: Stange
- 43: Schraubenmutter
- 5: Befestigungspunkt, Haltevorrichtung
- 51, 51': Halteblock
- 52: Gewindestange
- 53: Schraubenmutter
- 6: Solaranlage
- 61: Solarmodul
- 612: Längsrichtung
- 7: Grundfläche, ebene Fläche

## Patentansprüche

1. Montagevorrichtung (1, 1') zur Montage von Solarmodulen (61) auf einer ebenen Grundfläche (7), mit mindestens einem Grundelement (2) mit einer ebenen Auflagefläche (23), welches dazu geeignet ist, auf der ebenen Grundfläche (7) angeordnet zu werden, und mindestens einem Tragelement (3), welches auf einem Grundelement (2) befestigt (5) ist oder befestigbar ist und geeignet ist, mit einem Solarmodul (61) form-und/oder kraftschlüssig verbunden (4) zu werden, **dadurch gekennzeichnet, dass** das mindestens eine Tragelement (3) im wesentlichen ringförmig (31) ausgestaltet ist, wobei die Achse (35) des ringförmigen Tragelements (3) parallel zur Auflagefläche (23) des mindestens einen Grundelementes (2) verläuft.

2. Montagevorrichtung nach Anspruch 1, **dadurch gekennzeichnet, dass** das mindestens eine Tragelement (3) einen Reif (31) aufweist.

3. Montagevorrichtung nach Anspruch 2, **dadurch gekennzeichnet, dass** der Reif (31) eine umlaufende Sicke (315) aufweist.

4. Montagevorrichtung nach einem der vorangehenden Ansprüche, **dadurch gekennzeichnet, dass** das mindestens eine Tragelement (3) eine Rondelle (31) zur Stützung des Tragelements (3) in radialer Richtung aufweist.

5. Montagevorrichtung nach einem der vorangehenden Ansprüche, **dadurch gekennzeichnet, dass** das mindestens eine Tragelement (3) eine Sehne (33) und/oder eine Speiche (34) aufweist.

6. Montagevorrichtung nach einem der vorangehenden Ansprüche, **dadurch gekennzeichnet, dass** das Grundelement eine Platte (2) ist, insbesondere eine Betonplatte oder eine Metallplatte.

7. Montagevorrichtung nach einem der Ansprüche 1 bis 5, **dadurch gekennzeichnet, dass** das Grundelement (2) eine Wanne (22) umfasst ist, welche dazu geeignet ist, mit Beton oder Kies befüllt (21) zu werden.

8. Montagevorrichtung nach einem der vorangehenden Ansprüche, **dadurch gekennzeichnet, dass** das Tragelement (3) mit dem Grundelement (2) verschraubt oder vernietet ist.

9. Montagevorrichtung nach einem der vorangehenden Ansprüche, **gekennzeichnet durch** eine Haltevorrichtung (5), mit welcher das Tragelement (3) und das Grundelement (2) reversibel form- und/oder kraftschlüssig verbunden werden können.

10. Montagevorrichtung nach einem der vorangehenden Ansprüche, **gekennzeichnet durch** eine Haltevorrichtung (4) zur Befestigung des Solarmoduls (61) auf der Montagevorrichtung (1), wobei die Winkel-Position (α, α') der Haltevorrichtung (4) auf dem Umfang (36) des ringförmigen Tragelements (3) zumindest über einen Teilbereich des Umfangs wählbar ist.

11. Unterbau für ein Solarmodul 61, mit einer oder mehreren Montagevorrichtungen (1) nach einem der vorangehenden Ansprüche.

12. Solaranlage (6) mit einem oder mehreren Solarmodulen (61), **gekennzeichnet durch** eine oder mehrere Montagevorrichtungen (1) nach einem der Ansprüche 1 bis 10.
